# EUROPEAN PATENT SPECIFICATION

(11) **EP 3 464 428 B1**
(45) Date of publication and mention of the grant of the patent: **14.10.2020**
(21) Application number: 17724074.4
(22) Date of filing: 19.05.2017
(51) Int. Cl.: C08J 5/04

(54) **NATURAL FIBRE-REINFORCED COMPOSITE MATERIAL**
MIT NATÜRLICHEN FASERN VERSTÄRKTES VERBUNDMATERIAL
MATÉRIAU COMPOSITE RENFORCÉ PAR DES FIBRES NATURELLES

(30) Priority: 24.05.2016 EP 16171002
(43) Date of publication of application: 10.04.2019
(73) Proprietor: Green Composites B.V., 1019 WL Amsterdam (NL)
(72) Inventor: ZUIJDERDUIN, Albert Roland, NL-8501 MR Joure (NL); TEN BROEKE, Raymond Albertus Johannes, NL-8103 RC Raalte (NL); TALMA, Auke Gerardus, NL-7437 PM Bathmen (NL); LEPELAAR, Mark, NL-1019 WL Amsterdam (NL); BÖTTGER, Willem Otto Julius, NL-2051 LV Overveen (NL); GROOT, Rolf, NL-1562 KG Krommenie (NL)
(74) Representative: Algemeen Octrooi- en Merkenbureau B.V.
(86) International application number: PCT/EP2017/062056
(87) International publication number: WO 2017/202702

(56) References cited:
- WO-A1-2014/118101
- DATABASE WPI Week 201629 January 2016 (2016-01) Thomson Scientific, London, GB; AN 2016-003251 XP002764038, & CN 105 176 130 A (SHANDONG RIXIN COMPOSITE MATERIAL CO LTD) 23 December 2015 (2015-12-23)
- DATABASE WPI Week 201482 2015 Thomson Scientific, London, GB; AN 2014-W21898 XP002764039, & CN 104 045 986 A (SHANTOU HUASHACHI FURNITURE CO LTD) 17 September 2014 (2014-09-17)
- DATABASE WPI Week 201511 2015 Thomson Scientific, London, GB; AN 2015-09607M XP002764040, & CN 104 212 142 A (UNIV FUJIAN AGRIC & FORESTRY) 17 December 2014 (2014-12-17)

## Description

The present invention relates to a process for preparing a natural fibre-reinforced composite material and to a radically curable mixture comprising natural fibres.

Polymer-based materials can be reinforced with fibres in order to add rigidity and impede crack propagation. Thin fibres can have very high strength and, provided they are mechanically well attached to the matrix, they can greatly improve the composite's overall properties. There are two main categories of fibre-reinforced composite materials: short fibre-reinforced materials and continuous fibre-reinforced materials. Continuous fibre-reinforced materials often constitute a layered or laminated structure. The woven and continuous fibre styles are typically available in a variety of forms, being impregnated with the resin. The short fibres are typically employed in compression moulding and sheet moulding operations. They have the form of flakes, chips, or random mate. Common fibres used for reinforcement include glass fibres, carbon fibres, cellulose fibres (wood fibre, paper fibre, straw), high-strength polymers such as aramid, and natural fibres.

Natural fibres known as reinforcement fibres include jute, flax, kenaf, ramie, and hemp fibres. Isolation of the fibres from the plants is rather complicated and involves retting (immersing the stems in water), drying, and stripping (scraping off non-fibrous materials) steps.

CN105176130 relates to a building template made of FRP (fibre-reinforced polymer) waste, wherein the weight ratio of its raw materials is: plant fiber: 10-30 parts; unsaturated polyester resin: 40-60 parts; FRP waste: 80-120 parts low shrink additive: 20-40 parts; styrene: 2-3 parts; initiator: 1-1.5 parts; magnesium oxide: 0.8-1.2 parts; internal release agent: 2.4-3.6 parts.

CN 104045986 relates to an unsaturated polyester resin composite material for furniture containing the following components by weight: 100 parts of unsaturated polyester resin, 20 to 40 parts of modified bamboo fiber, and 20 to 50 parts of flame retardant, 0.5 ∼ 3 parts of accelerator, 0.8 ∼ 2 parts of initiator, 0.5 ∼ 2 parts of defoamer, 1 ∼ 10 parts of coupling agent.

CN104212142 relates to a bamboo fibril fiber-reinforced modified vegetable oil-based unsaturated polyester composite material, wherein the mass parts of the raw material components of the composite material are: bamboo fiber 80 to 100 parts, modified vegetable oil-based unsaturated polyester 80 to 100 parts of resin.

WO2014118101A1 relates to a process for the preparation of a fibre-reinforced composite material comprising the step of contacting (i) a radically curable resin, (ii) fibres with a total water content of 0.5-20 wt%, based on the total weight of fibres, (iii) at least one transition metal compound selected from manganese, iron, and copper compounds, and (iv) a peroxide.

It is also known to use grasses, i.e. plants of the Gramineae family, to reinforce composites. The advantage of grasses, compared to other natural fibres, is that they do not require isolation of the fibres. Furthermore, these plants are widely available and generally end up in waste streams. However, up to now, these fibres are mainly used in composites that cure at room temperature. Such composites have a high resin content (i.e. low fibre content) and are not subjected to high temperatures.

It is therefore an object of the present invention to provide highly filled composites containing such grasses. More in particular, it is an object to provide compression moulded articles containing these grasses. Even more in particular, it is desired to provide a bulk compression moulding compound (BMC)comprising such grasses.

Compression moulding is a method of moulding in which the moulding materials placed in a mould and subsequently compressed by closing the mould and applying pressure to it. Heat and pressure are maintained until the moulding material has cured.

Compression moulding is a high-volume, high-pressure method suitable for moulding complex, high-strength reinforcements. The advantages of compression moulding are its ability to mould large, fairly intricate parts, its low cost compared to other moulding techniques, and the low amounts of waste material produced.

The moulding material is generally prepared by either sheet moulding (resulting in a Sheet Moulding Compound [SMC]) or bulk moulding (resulting in a Bulk Moulding Compound [BMC]).

Manufacturing of SMC is a continuous in-line process. All components, except the fibres, are mixed and continuously metered onto to the surface of a carrier film. Two mirror imaged metering stations operate simultaneously, resulting in two coated carrier films. One of the coated carrier films is layered with chopped fibers. The two coated carrier films are then brought together in the compaction section, where the sandwich-like layered components are compacted into one homogenous compound sheet. The sheet is then stored in a controlled environment where it is matured.

BMC is manufactured by mixing all ingredients, including the fibres, for instance in a continuous screw mixer, a sigma blade mixer and a plough blade mixer. The resulting dough is then matured in a controlled environment until use in compression moulding .

The maturing step serves to increase the viscosity of the mixture in order to prevent phase separation and to ensure proper flow of the composition the high temperature and pressure in the mould. BMC is allowed to contain more fibers and less resin than SMC. Hence, for highly filled systems, BMC is preferred.

As mentioned above, there is a desire to provide highly filled, compression moulded thermosetting composites reinforced with natural fibers, more in particular with grasses, i.e. plants of the Gramineae family. However, grasses generally have high moisture contents. In view of the temperatures that are applied in compression moulding processes, any water that may be present in the fibres is expected to evaporate, leading to voids and/or other irregularities in the resulting product, which may negatively affect its quality. High fibre content (thus: high water content) will even aggravate this effect.

This would mean that all fibres must be intensively dried before their incorporation into the moulding compound. Fibres that attract water from the atmosphere and water-containing natural fibres thus would have to be dried completely before use and even need to be used under a dry atmosphere.

This is confirmed by WO 20051037516, which discloses a compression moulding process for obtaining natural fibre-reinforced materials. It involves the preparation of an SMC by sprinkling the natural fibres, e.g. big blue stem grass, on a coated carrier film. The grass had been vacuum dried for 16 hours at 80 °C. The SMC contained 20 wt% of the dried grass, 20 wt% of CaC0₃, 60 wt% of unsaturated polyester resin, 0.5 wt% methyl ethyl ketone peroxide (MEKP), and 0.03 wt% of the cure accelerator cobalt naphthenate. The SMC was matured at -1 0 °C for a few hours before being compression moulded.

There are several disadvantages to this process. First of all, the production of SMC is far more complicated than the production of BMC. SMC requires a special production line, whereas BMC only requires conventional mixing equipment. Second, it is much harder to homogeneously distribute the fibres using SMC than using BMC. SMC also requires a higher resin content than BMC.

Furthermore, the prior art process requires extensive drying of the fibres. Not only in view of the expected problems mentioned above, but also because it uses a cobalt compound to accelerate the cure. Cobalt accelerators do not work satisfactory in the presence of moisture.

In addition, the prior art process uses MEKP and a cobalt accelerator. This is a cure system suitable for room temperature cure. As a result, the prior art SMC could not be matured at room temperature, as that would have resulted in compete cure before compression moulding.

One object of the present invention is the provision of a radically curable mixture suitable for compression moulding, which contains fibers from plants of the Gramineae family, and has a resin content of at most 50 wt%.

According to another object of the invention, said radically curable mixture has the form of a dough and is suitable for use as Bulk Moulding Compound (BMC).

It is furthermore desired for the mixture to be free of cobalt, because legislation requires reduction of the amount of cobalt in view its toxicity.

It is a further object to provide a process for obtaining such mixtures, using plants that have not been dried extensively and are allowed to contain 0.5-25 wt% moisture.

It is another object for the process to allow maturing at room temperature.

These objects are met by the present invention, which relates to a process for manufacturing a radically curable mixture by mixing and/or kneeding a radically curable thermosetting resin, fibres from plants of the Gramineae family, one or more organic peroxides, and optionally fillers to form a dough, wherein the content of radically curable thermosetting resin in the mixture is in the range 20-50 wt.%, the total content of fillers and fibres in the mixture is in the range 50-80 wt.%, and wherein the content of fibres from plants of the Gramineae family in the mixture is in the range 5-80 wt.% and wherein the total moisture content of the fibres from plants of the Gramineae family is 0.5-25 wt.%, based on the total weight of said fibres, said plants are used without any pretreatment to isolate the fibres. The invention also relates to a compression moulding process for the preparation of fibre-reinforced articles, comprising the step of filling a mould with the radically curable mixture and applying a temperature in the range 60-180 °C and a pressure of at least 10 bar to the moulded mixture.

Graminae (also called Poaceae or true grasses) is a family of flowering plants. The family includes cereal crops such as maize (corn), wheat, rice, barley, and millet, but also common grasses, reeds, and bamboo.

Grass and reed fibres are preferred for use in the process of the present invention, since they are widely available as waste streams. Reed is the most preferred source of fibre.

Examples of grasses are snake grass, elephant grass, big blue stem grass, switch grass, broom grass, and munja grass.

Examples of reeds are giant reed and common reed, the latter being the most preferred.

Most preferred are grasses and reeds resulting from waste streams. In contrast to jute, flax, ramie, and hemp, true grasses can be used directly, without any pretreatment to isolate the fibres. The only pretreatment that may be required after harvesting are, depending on the particular circumstances, a washing step to remove any sand or soil, a drying step to remove adhering water, and/or a chopping step to obtain fibres of the desired size.

The drying step is preferably performed with warm air (temperature about 40-50 °C) until the material is free-flowing and contains 0.5-25 wt% of moisture.

The fibres to be used in the process preferably have a length in the range 0.5-60 mm, more preferably 1-50 mm, more preferably 1-40 mm, even more preferably 2-30 mm, even more preferably 2-20 mm, even more preferably 2-15 mm, and most preferably 2-10 mm.

The total moisture content of the fibres used in accordance with the present invention is 0.5-25 wt%, more preferably 2-20 wt%, most preferably 5-15 wt%, based on the total weight of fibres. Humid fibres are stronger than dry fibres. The water content of the fibres can be determined by drying a sample of the fibres for 1 hour in a hot air stove at 100 °C and determining the weight loss.

A sizing agent or another additive to improve adhesion between the fibres and the resin may be present in the mixture according to the invention, such as silane coupling agents. Examples of such silane coupling agents are acrylate silane and aminopropyl silane.

The fibres can be pre-treated with these agents, or the agents may be added to the mixture of fibres and resin.

Preferably, the mixture according to the present invention also contains fillers. Preferred fillers are calcium carbonate and calcium carbonate-containing sources, such as calcite. The fillers are preferably obtained from waste streams from other processes, such as water softening processes or shells. Other fillers may also be used. Preferred are fillers obtained from waste streams. The total content of fillers and fibres in the mixture is in the range 50-80 wt%, preferably 60-80 wt%, most preferably 70-80 wt%.

The content of fibres from plants of the Gramineae family in the mixture is in the range 5-80 wt%, more preferably 10-50 wt%, most preferably 10-30 wt%. Suitable resins to be cured according to the invention include alkyd resins, unsaturated polyester (UP) resins, vinyl ester resins, (meth)acrylate resins. Preferred resins are (meth)acrylate resins, UP resins, and vinyl ester resins. In the context of the present application, the terms "unsaturated polyester resin" and "UP resin" refer to the combination of unsaturated polyester and ethylenically unsaturated monomeric compound. The term "vinyl ester resin" refers to a resin produced by the esterification of an epoxy resin with an unsaturated monocarboxylic acid, and dissolved in an ethylenically unsaturated monomeric compound (e.g. styrene). UP resins and vinyl ester resins as defined above are common practice and commercially available.

Suitable UP resins to be cured by the process of the present invention are so-called ortho-resins, iso-resins, iso-npg resins, and dicyclopentadiene (DCPD) resins. Examples of such resins are maleic, fumaric, allylic, vinylic, and epoxytype resins, bisphenol A resins, terephthalic resins, and hybrid resins. Acrylate and methacrylate resins without an additional ethylenically unsaturated monomeric compound like styrene are referred to in this application as (meth)acrylate resins.

The radically curable resin may be combined with other types of resins, such as epoxy resins. A preferred resin combination that can be used in the process of the present invention is a combination of a UP resin and an epoxy resin. Examples of suitable ethylenically unsaturated monomers to be present in UP and vinyl ester resins include styrene and styrene derivatives like a-methyl styrene, vinyl toluene, indene, divinyl benzene, vinyl pyrrolidone, vinyl siloxane, vinyl caprolactam, stilbene, but also diallyl phthalate, dibenzylidene acetone, allyl benzene, methyl methacrylate, methylacrylate, (meth)acrylic acid, diacrylates, dimethacrylates, acrylamides, vinyl acetate, triallyl cyanurate, triallyl isocyanurate, allyl compounds which are used for optical application (such as (di)ethylene glycol diallyl carbonate), chlorostyrene, tert-butyl styrene, tertbutylacrylate, butanediol dimethacrylate, bismaleimides, biscitraconimides, bisitaconimides, monoitaconimides, monocitraconimides, monocitraconimides containing a functional group (e.g. an additional unsaturated functionality, for example n-allylcitraconimides), and mixtures thereof. Suitable examples of (meth)acrylate reactive diluents are PEG200 di(meth)acrylate, 1,4-butanediol di(meth)acrylate, 1,3-butanediol di(meth)acrylate, 2,3-butanediol di(meth)acrylate, 1,6-hexanediol di(meth)acrylate and its isomers, diethylene glycol di(meth)acrylate, triethylene glycol di(meth)acrylate, glycerol di(meth)acrylate, trimethylol propane di(meth)acrylate, neopentyl glycol di(meth)acrylate, dipropylene glycol di(meth)acrylate, tripropylene glycol di(meth)acrylate, PPG250 di(meth)acrylate, tricyclodecane dimethylol di(meth)acrylate, 1,10-decanediol di(meth)acrylate, tetraethylene glycol di(meth)acrylate, trimethylol propane tri(meth)acrylate, glycidyl (meth)acrylate, and mixtures thereof.

The amount of ethylenically unsaturated monomer to be used is preferably at least 0.1 wt%, based on the weight of the resin, more preferably at least 1 wt%, and most preferably at least 5 wt%. The amount of ethylenically unsaturated monomer is preferably not more than 50 wt%, more preferably not more than 40 wt%, and most preferably not more than 35 wt%.

Peroxides suitable for use in the composition and process of the present invention include inorganic peroxides and organic peroxides, such as conventionally used ketone peroxides, peroxyesters, diaryl peroxides, dialkyl peroxides, and peroxydicarbonates, but also peroxycarbonates, peroxyketals, hydroperoxides, diacyl peroxides, and hydrogen peroxide. Preferred peroxides are peroxyesters and peroxycarbonates.

The organic peroxide preferably has a 10 hour half-life, as measured with DSC-TAM in a 0.1 M monochlorobenzene solution, of at least 50 °C, more preferably at least 60 °C. This minimum half-life ensures sufficient pot life of the radically curable composition, so that the radically curable mixture can still be used for compression moulding after maturing at 20 °C for one week.

Particularly preferred peroxides are tert-amyl peroxy pivalate, tert-butyl peroxypivalate, 1,1,3,3-tertamethylbutyl peroxy-2-ethylhexanoate, tert-amyl peroxy-2-ethylhexanoate, tert-butyl peroxy-2-ethylhexanoate, tert-butyl peroxydiethylacetate, tert-butyl peroxyisobutyrate, tert-amylperoxy 2-ethylhexyl carbonate, tert-amyl peroxyacetate, tert-butyl peroxy-3,5,5-trimethylhexanoate, tert-butylperoxy isopropyl carbonate, tert-butylperoxy 2-ethylhexyl carbonate, tert-amyl peroxybenzoate, tert-butyl peroxyacetate, butyl 4,4-di(tertbutylperoxy) valerate, tert-butyl peroxybenzoate. The most preferred peroxide is tert-butyl peroxybenzoate. The peroxides can be added as such, or in combination with a phlegmatizer.

Examples of phlegmatizers are hydrophilic esters and hydrocarbon solvents. The amount of peroxide to be used for curing the resin is preferably at least 0.1 weight parts per hundred resin (phr), more preferably at least 0.5 phr, and most preferably at least 1 phr. The amount of peroxide is preferably not more than 8 phr, more preferably not more than 5 phr, most preferably not more than 2 phr. In addition to the above-mentioned ingredients, usual additives for compression moulding can be added, such as pigments, mould release agents (e.g. zinc stearate), and emulsifiers.

The radically curable mixture according to the present invention can be prepared by mixing or kneeding all ingredients to form a dough, followed by maturing the dough at a temperature of at most 25 °C.

Examples of suitable kneeding and/or mixing equipment are continuous crew mixers, sigma blade mixers, and plough blade mixers.

In a preferred embodiment, resin, peroxide, and the optional mould release agent are first mixed or kneeded, after which the filler(s) and the optional emulsifier and pigments are added, which is then followed by addition of the fibres. The resulting mixture is mixing or kneeded in suitable mixing or kneeding equipment to form a dough.

Maturing of the dough is preferably done in an environment that is shielded from light. The dough is preferably packaged such that volatiles (e.g. styrene) will not evaporate from the mixture. Maturing temperature is preferably room temperature, more preferably around 20°C. The maturing preferably takes at least three days, preferably up to 7 days.

Optionally, a transition metal compound is present in the mixture in order to accelerate the cure. Examples of suitable transition metal compounds are salts and complexes of iron, copper, or manganese, and combinations of such compounds. Copper and iron are the most preferred transition metals. Even more preferred are copper and a combination of copper and iron.

Although the addition of a transition metal compounds is not required in the present invention, if it is present, it is added in a total amount of 0.5-75 mmollkg resin, more preferably 2-50 mmol/kg, even more preferably 2-25 mmol/kg, and most preferably 2-10 mol/kg resin.

Suitable manganese, copper, and iron compounds are their halides, nitrates, sulphates, sulphonates, phosphates, phosphonates, oxides, carboxylates, and complexes of these metals with a ligand. Examples of suitable carboxylates are lactate, 2-ethyl hexanoate, acetate, proprionate, butyrate, oxalate, laurate, oleate, linoleate, palmitate, stearate, acetyl acetonate, octanoate, nonanoate, heptanoate, neodecanoate, or naphthenate. Examples of ligands are pyridine and the tridentate, tetradentate, pentadentate, and hexadentate nitrogen donor ligands disclosed in WO 2011/183309.

Preferred manganese compounds are manganese chloride, nitrate, sulphate, lactate, 2-ethyl hexanoate, octanoate, nonanoate, heptanoate, neodecanoate, naphthenate, and acetate, and the Mn complexes of pyridine, porphirine-based ligands, and of the tridentate, tetradentate, pentadentate, or hexadentate nitrogen donor ligands disclosed in WO 2011/83309. Any one of Mn(II), Mn(III), Mn(IV), and Mn(VII) compounds can be used.

Preferred copper compounds are copper chloride, nitrate, sulphate, lactate, 2-ethyl hexanoate, octanoate, nonanoate, heptanoate, neodecanoate, naphthenate, and acetate. Both Cu(I) and Cu(II) compounds can be used.

Preferred iron compounds are iron chloride, nitrate, sulphate, lactate, 2-ethyl hexanoate, octanoate, nonanoate, heptanoate, neodecanoate, naphthenate, acetate, and iron complexes of pyridine, porphirine-based ligands, or the tridentate, tetradentate, pentadentate, or hexadentate nitrogen donor ligands of WO 2011/83309. Both Fe(II) and Fe(III) can be used. More preferably, it is an iron(II) or iron(III) complex of a tridentate or pentadentate nitrogen donor ligand according to WO 2011/83309.

Preferred nitrogen donor ligands according to WO 2011/83309, for both Mn and Fe, are the bispidon ligands and the TACN-Nx ligands. The preferred bispidon ligand is dimethyl-2,4-di-(2-pyridyl)-3-methyl-7-(pyridin-2-ylmethyl)-3,7-diazabicyclo[3.3.1] nonan-9-one-I,5-dicarboxylate (N2py3o-Cl). The preferred TACNNx ligand is 1,4,7-trimethyl-I,4,7-triazacyclononane (Me₃-TACN).

In order to make articles by compression moulding the radically curable mixture, a mould is filled with the mixture. The mixture in the mould is subjected to a temperature in the range 60-180 °C, preferably 80-170 °C, even more preferably 100-160 °C, and most preferably 130-160 °C, and a pressure above 10 bar, preferably 10-120 bar, more preferably 40-100 bar, even more preferably 50-90 bar, and most preferably 60-80 bar.

The cured compositions find use in various applications, including marine applications, roof shingles, construction, relining, pipes and tanks, flooring, windmill blades, laminates, automotive parts, furniture, timbering, and street furniture (e.g. facade elements, lamppost armatures). If desired, the resulting article can be coated. A preferred way of coating is powder coating, because no volatiles are released during that process.

### EXAMPLES

### General procedure:

Unsaturated polyester resin (Palapreg© P14) and t-butyl peroxybenzoate (Trigonox©C) were mixed for 2 minutes at room temperature in a Z-blade mixer. CaC0₃ (Durcal© 5), Mg0 (Luvatol© MK35) and zinc stearate were added and mixed for another 2 minutes. Finally, the fibres were added and the resulting mixture was mixed for another 5 minutes.

The resulting BMC was matured at 20°C at room temperature and then pressed into a mold to form a plate with a size of 250x120 mm using Reaktometer (ex-SMC Technologie, Derk & Kuper OHG) with a a pressure of 5.3 MPa, a temperature of 145 °C, and a period of 180 seconds. Tensile strength and stiffness were determined in accordance with IS0527. Five different fibres were used.

The reed, bamboo, and grass fibres were obtained using a chopper and seeves; these fibres were not pre-dried; their moisture content was in the range 10-12 wt%.

Comparative Example 1: glass fibres with an average length of 6 mm.

Example 2: Reed with a fibre length in the range 3-8 mm.

Example 3: Grass with a fibre length in the range 3-8 mm.

Example 4: bamboo with a fibre length in the range 8-20 mm.

Example 5: Reed with a fibre length in the range 5-1 5 mm.

The results in Table 1 show that composites with satisfactory properties can

| | Comparative Example 1 | Example 2 | Example 3 | Example 4 | Example 5 |
|---|---|---|---|---|---|
| Palapreg P1 4 (pbw) | 300 | 300 | 300 | 300 | 300 |
| Trigonox C (pbw) | 4,5 | 4,5 | 4,5 | 4,5 | 4,5 |
| Zinc stearate (pbw) | 15 | 15 | 15 | 15 | 15 |
| Luvatol MK35 (pbw) | 4,5 | 4,5 | 4,5 | 4,5 | 4,5 |
| Durcal 5 (pbw) | 600 | 600 | 600 | 600 | |
| Glass (pbw) | 225 | | | | |
| Reed (pbw) | | 199 | | | 200 |
| Grass (pbw) | | | 165 | | |
| Bamboo (pbw) | | | | 200 | |
| | | | | | |
| Density (kg/l) | 1,88 | 1,75 | 1,77 | 1,7 | 1,7 |
| Tensile strength (MPa) | 21,4 | 19,9 | 18,6 | 12,9 | 13,7 |
| Specific tensile strength (kN m/kg) | 11,4 | 11,4 | 10,5 | 8,6 | 7,9 |
| Tensile stiffness (GPa) | 1,8 | 1,9 | 1,4 | 1,9 | 1,9 |
| Specific tensile stiffness (MN m/kg) | 0,9 | 1,1 | 0,8 | 1,1 | 1,1 |

## Claims

1. Process for manufacturing a radically curable mixture by mixing and/or kneeding a radically curable thermosetting resin, fibres from plants of the Gramineae family, one or more organic peroxides, and optionally fillers to form a dough, wherein the content of the radically curable thermosetting resin in the mixture is in the range 20-50 wt.%, the total content of fillers and fibres in the mixture is in the range 50-80 wt.%, wherein the content of fibres from plants of the Gramineae family in the mixture is in the range 5-80 wt.% and wherein the total moisture content of the fibres from plants of the Gramineae family is 0.5-25 wt.%, based on the total weight of said fibres, said plants being used without any pretreatment to isolate the fibres.

2. Process according to claim 1 wherein the radically curable mixture is suitable for use as Bulk Moulding Compound (BMC) or Sheet Moulding Compound (SMC).

3. Process according to claim 1 or 2 wherein the resin is an unsaturated polyester resin.

4. Process according to any one of the preceding claims wherein the fibres are selected from the group consisting of grass, reed, and bamboo, preferably from the group consisting of grass and reed.

5. Process according to any one of the preceding claims wherein the total moisture content of the fibres from plants of the Gramineae family is 2-20 wt.%, and most preferably 5-15 wt.%, based on the total weight of said fibres.

6. Process according to any one of the preceding claims wherein the fibres have a length in the range 0.5-60 mm, more preferably 1 -50 mm, more preferably 1 -40 mm, even more preferably 2-30 mm, even more preferably 2-20 mm, even more preferably 2-15 mm, and most preferably 2-10 mm.

7. Process according to any one of the preceding claims wherein the content of radically curable thermosetting resin in the mixture is in the range 20-30 wt.%.

8. Process according to any one of the preceding claims wherein the content of fibres from plants of the Gramineae family in the mixture is in the range 10-30 wt.%.

9. Process according to any one of the preceding claims containing a filler, wherein the filler is a source of calcium carbonate.

10. Process according to any one of the preceding claims wherein the peroxide is selected from the group consisting of peroxyesters and peroxycarbonates.

11. Process according to claim 10 wherein the organic peroxide is tert-butyl peroxybenzoate.

12. Process according any one of the preceding claims wherein the resulting dough is matured at a temperature below 25°C.

13. Compression moulding process for the preparation of fibre-reinforced articles comprising the step of filling a mould with the radically curable mixture obtained according to any one of claims 1 -12 and applying a temperature in the range 60-180°C and a pressure of at least 10 bar to the moulded mixture.

14. Article obtained by a compression moulding process according to claim 13.

## Patentansprüche

1. Verfahren zur Herstellung einer radikalisch härtbaren Mischung durch Mischen und/oder Kneten von radikalisch härtbarem Duroplastharz, Fasern von Pflanzen aus der Familie Gramineae, einem oder mehreren organischen Peroxiden und gegebenenfalls Füllstoffen zur Bildung eines Teigs, wobei der Gehalt des radikalisch härtbaren Duroplastharzes in der Mischung im Bereich von 20-50 Gew.-% liegt, der Gesamtgehalt an Füllstoffen und Fasern in der Mischung im Bereich von 50-80 Gew.-% liegt, wobei der Gehalt an Fasern von Pflanzen aus der Familie Gramineae in der Mischung im Bereich von 5-80 Gew.-% liegt und wobei der Gesamtfeuchtegehalt der Fasern von Pflanzen aus der Familie Gramineae 0,5-25 Gew.-%, bezogen auf das Gesamtgewicht der Fasern, beträgt, wobei man die Pflanzen ohne jegliche Vorbehandlung zur Isolierung der Fasern verwendet.

2. Verfahren nach Anspruch 1, wobei sich die radikalisch härtbare Mischung für die Verwendung als Bulk Moulding Compound (BMC) oder Sheet Moulding Compound (SMC) eignet.

3. Verfahren nach Anspruch 1 oder 2, wobei es sich bei dem Harz um ein ungesättigtes Polyesterharz handelt.

4. Verfahren nach einem der vorhergehenden Ansprüche, wobei die Fasern aus der Gruppe bestehend aus Gras, Ried und Bambus, vorzugsweise aus der Gruppe bestehend aus Gras und Ried, ausgewählt sind.

5. Verfahren nach einem der vorhergehenden Ansprüche, wobei der Gesamtfeuchtegehalt der Fasern von Pflanzen aus der Familie Gramineae 2-20 Gew.-% und ganz besonders bevorzugt 5-15 Gew.-%, bezogen auf das Gesamtgewicht der Fasern, beträgt.

6. Verfahren nach einem der vorhergehenden Ansprüche, wobei die Fasern eine Länge im Bereich von 0,5-60 mm, weiter bevorzugt 1-50 mm, weiter bevorzugt 1-40 mm, noch weiter bevorzugt 2-30 mm, noch weiter bevorzugt 2-20 mm, noch weiter bevorzugt 2-15 mm und ganz besonders bevorzugt 2-10 mm aufweisen.

7. Verfahren nach einem der vorhergehenden Ansprüche, wobei der Gehalt an radikalisch härtbarem Duroplastharz in der Mischung im Bereich von 20-30 Gew.-% liegt.

8. Verfahren nach einem der vorhergehenden Ansprüche, wobei der Gehalt an Fasern von Pflanzen aus der Familie Gramineae in der Mischung im Bereich von 10-30 Gew.-% liegt.

9. Verfahren nach einem der vorhergehenden Ansprüche, enthaltend einen Füllstoff, wobei der Füllstoff eine Quelle für Calciumcarbonat ist.

10. Verfahren nach einem der vorhergehenden Ansprüche, wobei das Peroxid aus der Gruppe bestehend aus Peroxyestern und Peroxycarbonaten ausgewählt ist.

11. Verfahren nach Anspruch 10, wobei es sich bei dem organischen Peroxid um tert-Butylperoxybenzoat handelt.

12. Verfahren nach einem der vorhergehenden Ansprüche, wobei man den entstehenden Teig bei einer Temperatur von weniger als 25 °C altern lässt.

13. Formpressverfahren zur Herstellung von faserverstärkten Gegenständen, umfassend den Schritt des Füllens einer Form mit der nach einem der Ansprüche 1 bis 12 erhaltenen radikalisch härtbaren Mischung und des Anwendens einer Temperatur im Bereich von 60 bis 180 °C und eines Drucks von mindestens 10 bar auf die geformte Mischung.

14. Gegenstand, erhalten durch ein Formpressverfahren nach Anspruch 13.

## Revendications

1. Procédé de fabrication d'un mélange durcissable par voie radicalaire en mélangeant et/ou en malaxant une résine thermodurcissable durcissable par voie radicalaire, des fibres provenant des plantes de la famille des graminées, un ou plusieurs peroxyde(s) organique(s), et éventuellement des charges pour former une pâte, où la teneur de la résine thermodurcissable durcissable par voie radicalaire dans le mélange est comprise entre 20 et 50% en poids, la teneur totale de charges et de fibres dans le mélange est comprise entre 50 et 80% en poids, où la teneur de fibres provenant de plantes de la famille des graminées dans le mélange est comprise entre 5 et 80% en poids et où la teneur totale d'humidité des fibres provenant des plantes de la famille des graminées est de 0,5 à 25% en poids, par rapport au poids total desdites fibres, lesdites plantes étant utilisées sans aucun prétraitement pour isoler les fibres.

2. Procédé selon la revendication 1, dans lequel le mélange durcissable par voie radicalaire est approprié pour une utilisation en tant que composé de moulage en vrac (BMC) ou composé de moulage en feuille (SMC).

3. Procédé selon la revendication 1 ou 2 dans lequel la résine est une résine de polyester insaturé.

4. Procédé selon l'une quelconque des revendications précédentes, dans lequel les fibres sont choisies dans le groupe constitué de l'herbe, du roseau et du bambou, de préférence dans le groupe constitué de l'herbe et du roseau.

5. Procédé selon l'une quelconque des revendications précédentes, dans lequel la teneur totale en humidité des fibres provenant des plantes de la famille des graminées est comprise entre 2 et 20% en poids, et plus préférablement entre 5 et 15% en poids, par rapport au poids total desdites fibres.

6. Procédé selon l'une quelconque des revendications précédentes, dans lequel les fibres ont une longueur se trouvant dans la plage allant de 0,5 à 60 mm, plus préférablement allant de 1 à 50 mm, plus préférablement allant de 1 à 40 mm, encore plus préférablement allant de 2 à 30 mm, encore plus préférablement allant de 2 à 20 mm, encore plus préférablement allant de 2 à 15 mm, et idéalement allant de 2 à 10 mm.

7. Procédé selon l'une quelconque des revendications précédentes, dans lequel la teneur de la résine thermodurcissable durcissable par voie radicalaire dans le mélange est dans la plage allant de 20 à 30% en poids.

8. Procédé selon l'une quelconque des revendications précédentes, dans lequel la teneur des fibres provenant de plantes de la famille des graminées dans le mélange est comprise entre 10 et 30% en poids.

9. Procédé selon l'une quelconque des revendications précédentes contenant une charge, où la charge est une source de carbonate de calcium.

10. Procédé selon l'une quelconque des revendications précédentes, dans lequel le peroxyde est choisi dans le groupe constitué de peroxyesters et de peroxycarbonates.

11. Procédé selon la revendication 10, dans lequel le peroxyde organique est le peroxybenzoate de tert-butyle.

12. Procédé selon l'une quelconque des revendications précédentes, dans lequel la pâte résultante est maturée à une température inférieure à 25°C.

13. Procédé de moulage par compression pour la préparation d'articles renforcés de fibres comprenant l'étape de remplissage d'un moule du mélange durcissable par voie radicalaire obtenu selon l'une quelconque des revendications 1 à 12 et d'application d'une température dans la plage allant de 60 à 180°C et d'une pression d'au moins 10 bars au mélange moulé.

14. Article obtenu par un procédé de moulage par compression selon la revendication 13.
